# EUROPEAN PATENT SPECIFICATION

(11) **EP 2 291 879 B1**
(45) Date of publication and mention of the grant of the patent: **04.01.2012**
(21) Application number: 09758674.7
(22) Date of filing: 20.05.2009
(51) Int. Cl.: H01M 8/02, H01M 8/04, H01M 8/24, H01M 8/12

(54) **SOLID OXIDE FUEL CELL SYSTEMS WITH HEAT EXCHANGERS**
FESTOXIDBRENNSTOFFZELLENSYSTEME MIT WÄRMETAUSCHERN
SYSTÈMES DE PILES À COMBUSTIBLE À OXYDE SOLIDE, DOTÉS D'ÉCHANGEURS THERMIQUES

(30) Priority: 30.05.2008 US 130531
(43) Date of publication of application: 09.03.2011
(73) Proprietor: Corning Inc., Corning, NY 14831 (US)
(72) Inventor: HE, Longting, Horseheads NY 14845 (US); POLLARD, Scott, C., Big Flats NY 14814 (US); ST. JULIEN, Dell, J., Watkins Glen NY 14891 (US)
(74) Representative: Anderson, James Edward George
(86) International application number: PCT/US2009/003118
(87) International publication number: WO 2009/148510

(56) References cited:
- WO-A-2007/021280
- DE-C1- 4 430 958
- US-A1- 2006 115 709
- US-A1- 2006 166 053
- US-A1- 2007 051 631

## Description

### ACKNOWLEDGEMENT

This application claims the benefit of priority to U.S. Patent Application Serial No. 61/130,531, filed on May 30, 2008.

This invention was made with Government support under Cooperative Agreement 70NANB4H3036 awarded by National Institute of Standards and Technology (NIST). The Government has certain rights in this invention.

### Field of the Invention

The present invention relates to solid oxide fuel cells and, more particularly, to systems and methods for managing the thermal energy produced by the electrochemical reactions within a reaction chamber.

### Background

Recently, significant attention has been focused on fuel cells as clean energy sources capable of highly efficient energy conversion in an environmentally friendly manner. Solid oxide fuel cells (SOFC) are one type of fuel cell that work at very high temperatures, typically between 700 °C and 1000 °C. Solid oxide fuel cells can have multiple geometries, but are typically configured in a planar geometry. In a conventional planar configuration, an electrolyte is sandwiched between a single anode electrode and a single cathode electrode. The sandwiched electrolyte is used as a partition between a fuel gas, such as hydrogen, which is supplied to a partition on the anode electrode side, and an air or oxygen gas, which is supplied to the partition on the cathode electrode side.

In a typical solid oxide fuel cell system, approximately one half of the kinetic energy of reactants, such as fuel and oxygen, is converted into electricity and the other half is converted to thermal energy, which causes a significant temperature increase within the SOFC system. In order to trigger fast electrochemical reactions, the reactants often must be heated to a high temperature. For example, in a system using a thin yttria-partially stabilized zirconia (3YSZ) electrolyte, the reactants have to be heated to approximately 725°C to obtain an effective reaction. With such an initial temperature of reactants, the peak temperature within the fuel cell for a stoichiometric hydrogen-air system can rise to more than 1000°C.

The electrical and mechanical performance of fuel cells depends heavily on the operating temperature of the system. At high temperatures (such as about 1000°C or more), serious issues may arise in the way of thermal mechanical stress and the melting of sealing materials within the solid oxide fuel cell system components. Furthermore, external heating is often needed to heat the reactants to their optimal reaction temperature, which results in low overall system efficiency.

Various thermal management strategies have been developed. For example, U.S. 2004/0170879A1 discloses a shape memory alloy structure that is connected to a fuel cell for thermal management. U.S. 2005/0014046A1 discloses an internal bipolar heat exchanger that is used to remove the heat from an anode side of an individual cell to heat the cathode flow of another cell. In U.S. 2004/0028972A1, a fluid heat exchanger is disclosed for transferring heat between fuel cell units and a heat exchanger fluid flow, which flows in a direction perpendicular to the electrolyte surface. Further, in U.S. 2003/017695A1, a reformer reactor is disclosed that is connected to a fuel cell for helping the thermal management at the system level. In WO2003065488A1, an internal reformer is disclosed for use in thermal management of a fuel cell.

Accordingly, there is a need in the art for thermal management systems and methods that are able to both reduce the thermal mechanical stress that results from the thermal energy generated in the reaction and preheat the reactants that enter the reaction chamber increase the overall system efficiency of the solid oxide fuel cell

### SUMMARY

The present invention relates to embodiments of stack designs for solid oxide fuel cell (SOFC) systems exhibiting high efficiency and a relatively narrow distribution of operating temperature across the electrolyte of the SOFC.

According to one exemplary embodiment, A modular solid oxide fuel cell system, comprises: (i) a housing; (ii) at least one modular fuel cell packet comprising:
a fuel cell frame; a first electrode assembly comprising a first planar electrolyte sheet having a plurality of anodes disposed on a first surface of the first electrolyte sheet and a plurality of cathodes disposed on an opposed second surface of the first electrolyte sheet; and a second electrode assembly comprising a second planar electrolyte sheet having a plurality of anodes disposed on a first surface of the second electrolyte sheet and a plurality of cathodes disposed on an opposed second surface of the second electrolyte sheet, wherein the fuel cell frame supports the first and second electrode assemblies such that the respective first and second electrode assemblies are separated from one another and such that the respective first surfaces of the respective first and second electrolyte sheets face each other and define an anode chamber, wherein the fuel cell frame further defines a fuel inlet in fluid communication with the anode chamber; and (iii) a plurality of modular oxidant heat exchange packets, each heat exchange packet comprising a body having a pair of opposed, spaced side walls, wherein the body further defines an interior volume, an oxidant inlet in communication with the interior volume, and at least one outlet in communication with the interior volume,
wherein the housing supports the at least one modular fuel cell packet and the plurality of modular heat exchange packets, wherein a pair of modular heat exchange packets of the plurality of modular heat exchange packets are positioned in spaced opposition and define an oxidant chamber therebetween, wherein one modular fuel cell packet of the at least one modular fuel cell packet is positioned within the oxidant chamber in spaced relation to the pair of modular heat exchange packets; and wherein the outlet of the pair of modular heat exchange packets is in fluid communication with the oxidant chamber.

In one example, the SOFC systems comprise preheating chambers that are interposed between active SOFC packets, such as planar electrolyte electrode assemblies within SOFCs, to provide internal heat exchange, which reduces or eliminates the need for an inefficient external preheating system. By utilizing a portion of the thermal energy generated within an electrochemical reaction chamber to preheat air and/or fuel entering the fuel cell, the overall system efficiency can be significantly increased. Further, preheating the air allows for a reduced flow rate, which also increases the system efficiency and reliability. The preheating channels can also act as barriers between each single fuel cell packet, which aids in isolating damage within a single fuel cell device.

In one exemplary embodiment, the present invention provides a modular solid oxide fuel cell system comprising a housing, at least one modular fuel cell packet, and a plurality of modular oxidant heat exchange packets. In a further embodiment, the at least one modular fuel cell packet comprises a fuel cell frame, a first electrode assembly comprising a first planar electrolyte sheet having a plurality of anodes disposed on a first surface of the first electrolyte sheet and a plurality of cathodes disposed on an opposed second surface of the first electrolyte sheet, and a second electrode assembly comprising a second planar electrolyte sheet having a plurality of anodes disposed on a first surface of the second electrolyte sheet and a plurality of cathodes disposed on an opposed second surface of the second electrolyte sheet. The fuel cell frame can support the first and second electrode assemblies such that they are separated from one another and such that the respective first surfaces of the first and second electrolyte sheets face each other and define an anode chamber. The fuel cell frame can further define a fuel inlet in fluid communication with the anode chamber.

In yet a further exemplary embodiment, the housing can support the at least one modular fuel cell packet and the plurality of modular heat exchange packets. The pair of modular heat exchange packets can be positioned in spaced opposition and define an oxidant chamber therebetween. A modular fuel cell packet can be positioned within the oxidant chamber in spaced relation to the pair of modular heat exchange packets. According to yet another embodiment, the outlet of the pair of modular heat exchange packets is in fluid communication with the oxidant chamber

In another exemplary embodiment, the present invention provides a method for generating electrical power that comprises providing a modular solid oxide fuel cell system comprising a housing, at least one modular fuel cell packet, and a plurality of modular oxidant heat exchange packets. The method can further comprise positioning at least two of the plurality of modular oxidant heat exchange packets within the housing in spaced relation to each other and positioning one of the at least one modular fuel cell packets within the housing and in between the at least two modular oxidant heat exchange packets. In a particular embodiment, the at least one modular fuel cell packets is in spaced relation to each of the at least two modular oxidant heat exchange packets. In a further embodiment, the method comprises supplying an oxidant stream to the oxidant inlet of at least one of the modular oxidant heat exchange packets, and supplying a fuel stream to the fuel inlet of the at least one modular fuel cell packet. In yet a further embodiment, the method comprises using thermal energy generated by the at least one fuel cell packet to preheat the oxidant stream.

Additional embodiments of the invention will be set forth, in part, in the detailed description, and any claims which follow, and in part will be derived from the detailed description, or can be learned by practice of the invention. It is to be understood that both the foregoing general description and the following detailed description are exemplary and explanatory only and are not restrictive of the invention as disclosed and/or as claimed.

### BRIEF DESCRIPTION OF THE DRAWINGS

The accompanying drawings, which are incorporated in and constitute a part of this specification, illustrate certain aspects of the instant invention and together with the description, serve to explain, without limitation, the principles of the invention.

FIG. 1 is a cut-away view of a modular solid oxide fuel cell system within an operating environment, according to one embodiment of the present invention.

FIG. 2A illustrates a fuel cell frame of a modular fuel cell packet, according to another embodiment of the present invention.

FIG. 2B is a cross-sectional view of Section A-A of the fuel cell packet frame of FIG. 2A.

FIG. 3 illustrates a modular fuel cell packet, according to one embodiment of the present invention.

FIG. 4 illustrates a side wall of a modular oxidant heat exchange packet, according to other embodiment of the present invention.

FIG. 5 is a perspective, cross-sectional view of a modular solid oxide fuel cell system with modular oxidant heat exchange packets arranged therein, according to one exemplary embodiment of the present invention.

FIG. 6 is a perspective, cross-sectional view of a modular solid oxide fuel cell system with modular fuel cell packets and modular heat exchange packets arranged therein, according to another exemplary embodiment of the present invention.

FIG. 7 illustrates oxidant and fuel flow within a modular solid oxide fuel cell.

### DETAILED DESCRIPTION OF THE INVENTION

The following description of the invention is provided as an enabling teaching of the invention in its best, currently known embodiment. To this end, those skilled in the relevant art will recognize and appreciate that many changes can be made to the various embodiments of the invention described herein, while still obtaining the beneficial results of the present invention. It will also be apparent that some of the desired benefits of the present invention can be obtained by selecting some of the features of the present invention without utilizing other features. Accordingly, those who work in the art will recognize that many modifications and adaptations to the present invention are possible and can even be desirable in certain circumstances and are a part of the present invention. Thus, the following description is provided as illustrative of the principles of the present invention and not in limitation thereof.

As used herein, the singular forms "a," "an" and "the" include plural referents unless the context clearly dictates otherwise. Thus, for example, reference to an "oxidant preheating chamber" includes embodiments having two or more such "oxidant preheating chambers" unless the context clearly indicates otherwise.

Ranges can be expressed herein as from "about" one particular value, and/or to "about" another particular value. When such a range is expressed, another embodiment includes from the one particular value and/or to the other particular value. Similarly, when values are expressed as approximations, by use of the antecedent "about," it will be understood that the particular value forms another embodiment. It will be further understood that the endpoints of each of the ranges are significant both in relation to the other endpoint, and independently of the other endpoint.

As briefly summarized above, the present invention provides systems and methods for managing temperature distribution within a modular solid oxide fuel cell device, and increasing overall system efficiency. These systems and methods can, in various embodiments, increase the efficiency of a solid oxide fuel cell system by utilizing thermal energy produced in reactions within the fuel cell device to preheat air and/or fuel gases entering the fuel cell device, thereby reducing and/or eliminating the need for an external preheating system.

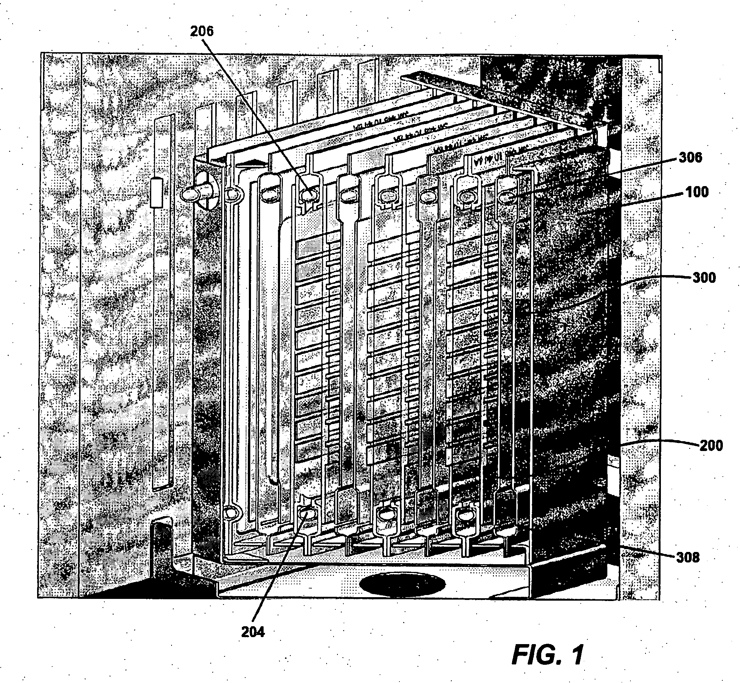

According to various embodiments of the present invention and as illustrated in **Figure 1****,** for example, a modular solid oxide fuel cell system **10** comprises a housing **100,** at least one modular fuel cell packet **200,** and at least one modular oxidant heat exchange packet **300.** As illustrated in **Figure 1****,** a plurality of modular fuel cell packets **200** and a plurality of modular oxidant heat exchange packets **300** can be arranged within the housing **100** in an alternating array of fuel cell packets and oxidant heat exchange packets. Thus, in one particular embodiment, the fuel cell packets and heat exchange packets can be arranged such that each fuel cell packet is positioned in between two heat exchange packets. Therefore, in this configuration, a minimum number of packets are 1 fuel cell packet, and 2 heat exchange packets. The maximum number of packets is determined by the amount of output power required from the solid oxide fuel cell system.

Each fuel cell packet **200** incorporates a hermetically isolated fuel chamber situated inside the fuel cell packet that is formed between the two fuel cell devices (also referred to an electrode assemblies herein). More specifically, a fuel cell packet **200,** according to various embodiments, can comprise a fuel cell packet frame **202** and at least one electrode assembly (i.e., a fuel cell device) **210.** In the embodiment shown in **Figure 1****,** each fuel cell device **210** is a multi-cell device- i.e., each fuel cell device **210** comprises a plurality of arrayed fuel cells. In this particular embodiment, each fuel cell device is a planar, electrolyte supported fuel cell array.

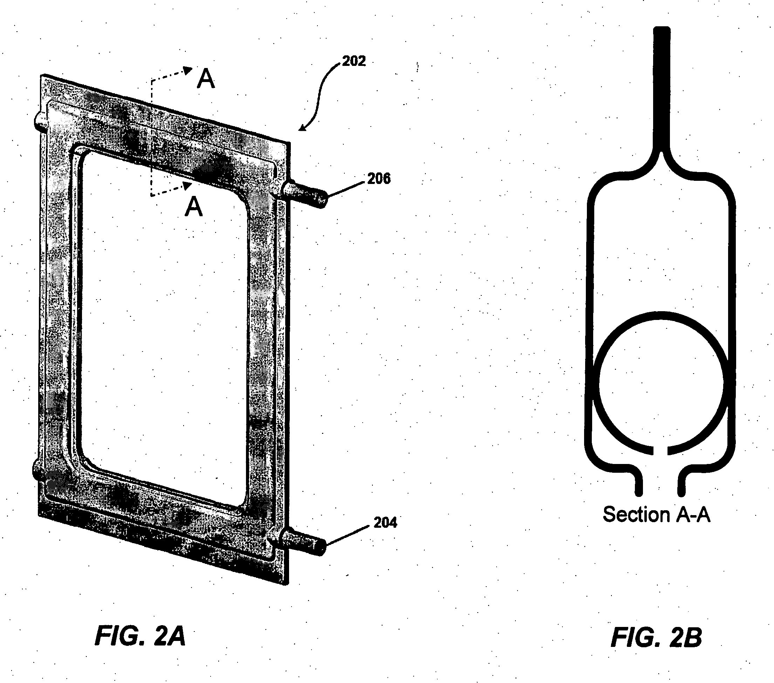

An exemplary fuel cell packet frame **202** is illustrated in **Figures 2A and 2B****.** The fuel cell frame can be made of substantially rectangular stamped sheets of various materials. The fuel cell frame may be manufactured, for example, from stainless steel sheets **203,** such as E-bright, or 446-stainless steel. Alternatively, a fuel cell frame may be made from glass, glass ceramic, fully or partially stabilized zirconia. Preferably, the coefficients of thermal expansion (CTE) of the frame material is close to that of the or the electrolyte material. (E.g., the CTE difference between the frame and the electrolyte materials is within 1x10-6cm/cm/°C, preferably, 0.6x10-6cm/cm/°C, more preferably 0.4x10-6cm/cm/°C) For example, each frame can be manufactured as a sheet and can have a substantially rectangular aperture **202A** defined therein the inner portion of the sheet; thus, each sheet can define an inner periphery and an outer periphery. The sheet can be stamped, for example, in the portion of the sheet lying between the inner periphery and outer periphery, such as to form a well. As shown in **Figure 2B****,** the well can be shaped such that when the sheets **203** are adjoined, face-to-face, they make substantially full contact along portions of the outer periphery, but are at a spaced distance from each other along portions of the inner periphery. A fuel inlet **204** can be in fluid communication with the well formed in the lower portion of the fuel cell frame, such as shown in **Figure 2A****.** Similarly, a fuel outlet **206** can be in fluid communication with the well formed in the upper portion of the fuel cell frame.

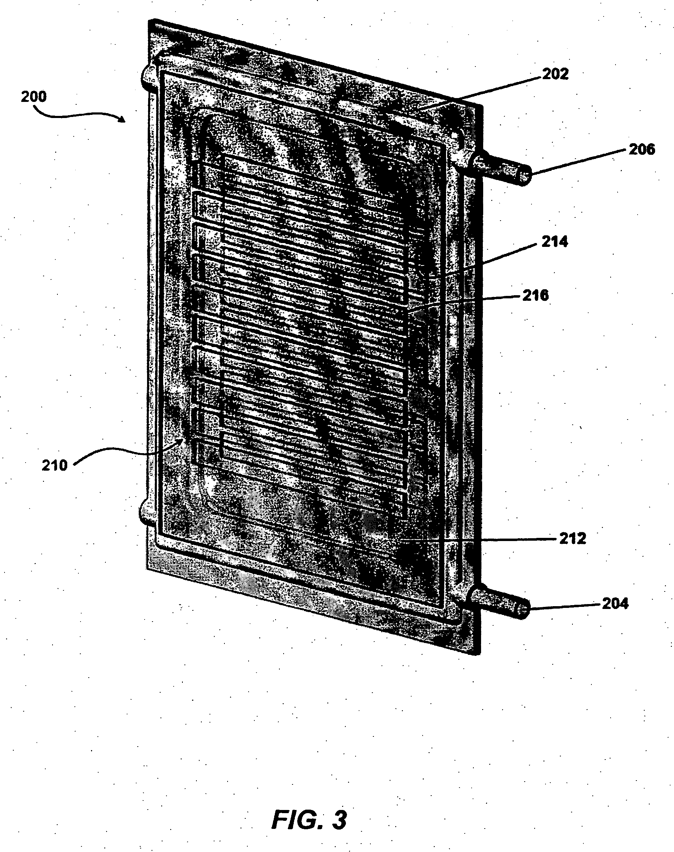

A fuel cell packet **200,** according to further embodiments, can comprise at least one fuel cell device **210** (also referred to as electrode assembly herein). With reference to **Figure 3****,** an electrode assembly can comprise an electrolyte sheet **212** that can be a substantially planar sheet with a first surface and an opposing second surface. A plurality of anodes **214** can be disposed on the first surface and a plurality of cathodes **216** can be disposed on the opposed second surface, forming a multi-cell fuel cell device. A second electrode assembly can be similarly formed. In one embodiment, the fuel cell frame **202** can support the first and second electrode assemblies **210** such that the first and second electrode assemblies (i.e., fuel cell devices) **210** are separated from one another at a spaced distance. In a further embodiment, the first and second electrode assemblies **210** are supported by the frame **202** such that the respective first surfaces of the first and second electrode assemblies **210** face each other and define an anode chamber **220** (i.e., fuel chamber). As described above, the fuel cell frame **202** can be formed of a stamped material (or, alternatively, can be made from glass or glass ceramic) in such a manner that portions of the sheets of the fuel cell frame are at a spaced distance d from each other along the inner periphery. This distance d made be, for example, 0.5 mm or more. A typical distance may be, for example 1 mm to 7mm. In this manner, there can be fluid communication from the fuel inlet **204,** through the well formed in the lower portion of the fuel cell frame, and into the anode chamber (also referred to as a fuel chamber herein). Likewise, there can be fluid communication from the anode chamber, through the well formed in the upper portion of the fuel cell frame, and to the fuel outlet **206** of the fuel cell packet **200.**

According to an embodiment of the present invention the direction of fuel flow in the fuel cell packets **200** is substantially in the direction of gravity. The frames **202** of fuel cell packets may be fabricated, for example, from formed stainless steel alloy with a wall thickness of no more than 1 mm, for example 0.25 mm -1 mm.

In one embodiment, the plurality of cathodes react **216** with an oxidant, such as oxygen-containing air, to produce oxygen ions. The plurality of anodes **214** use the oxygen ions produced by the cathode **216** to react with fuel (such as, but not limited to, hydrogen gas) to produce water and electricity. The electrolyte sheet **212** acts as a membrane or barrier, separating the oxidant on the cathode side from the fuel on the anode side. In this configuration, the electrolyte sheet **212** can also serve as an electrical insulator that prevents electrons resulting from the oxidation reaction on the anode side from reaching the cathode side. In a further embodiment, the electrolyte sheet **212** can be configured to conduct the oxygen ions, produced by the cathodes **216,** to the anodes **214.**

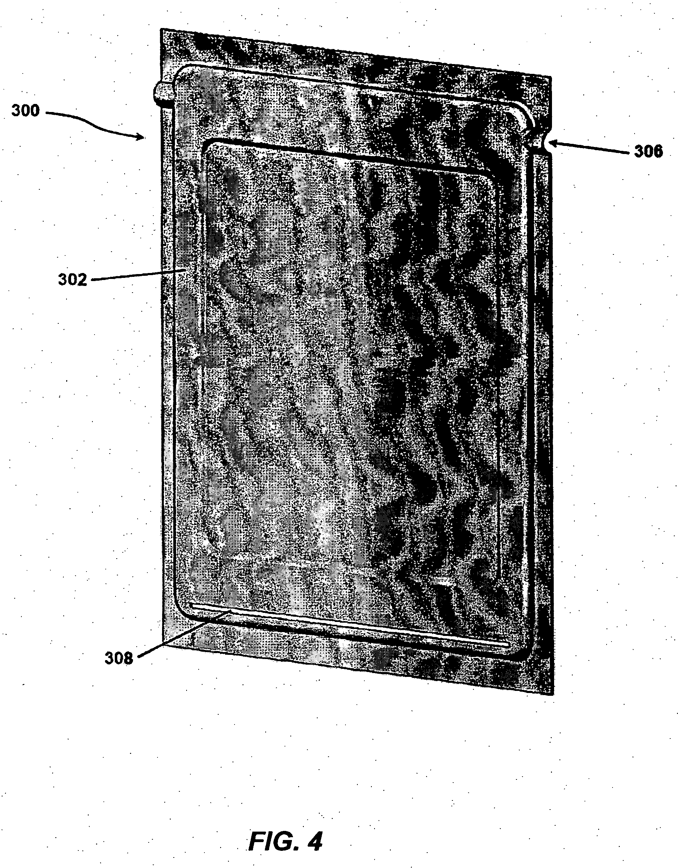

A modular solid oxide fuel cell system, according to some embodiments, further comprises a plurality of modular oxidant heat exchange packets **300.** A modular oxidant heat exchange packet can comprise a body having a pair of opposed, spaced side walls **302** that are respectively positioned to define an interior volume **301** (i.e., air chamber), also referred to as a heat exchange cavity herein. **Figure 4** illustrates a side wall **302** of an exemplary modular oxidant heat exchange packet **300.** The walls **302** of the modular oxidant heat exchange packet may be manufactured, for example, from stainless steel such as E-bright, or 446 stainless steel, or a nickel alloy, or may be made from glass, glass ceramic, fully or partially stabilized zirconia. The walls **302** may be fabricated from formed stainless steel alloy with a thickness not greater than 1 mm. The walls **302** may be formed, for example, from formed stainless steel alloy with a wall thickness of no more than 1 mm, for example 0.1 mm to 1 mm. The walls **302** of the heat exchange packets **300** may comprise two formed alloy structures (walls) that abut each other, but not constrained such that each stamp/form can slip relative to each other under conditions of thermal gradients.

As can be seen, a portion of the side walls can be formed to define an oxidant inlet 306 in communication with the interior volume (internal air chamber) **301,** which serves as an oxidant preheating chamber (i.e., heat exchange chamber). The side walls **302** can further define at least one outlet 308 in communication with the interior volume **301.** In a particular embodiment (see **Figure 4****),** the outlet is a substantially horizontal slit defined in the lower portion of the side wall **302.** In another embodiment the oxidant outlet **308** is similar in shape to the oxidant inlet **306.** The heat exchange packets **300** do not need to be hermetically sealed, and do not need to be CTE matched to the fuel cell devices.

The heat exchange packets **300** may be comprised of a frame and two planar electrolyte sheets, the electrolyte sheets being arranged substantially parallel to one another, such that the cavity between them defines a an internal air chamber **301** that serves as an oxidant *(air) heat exchange chamber.

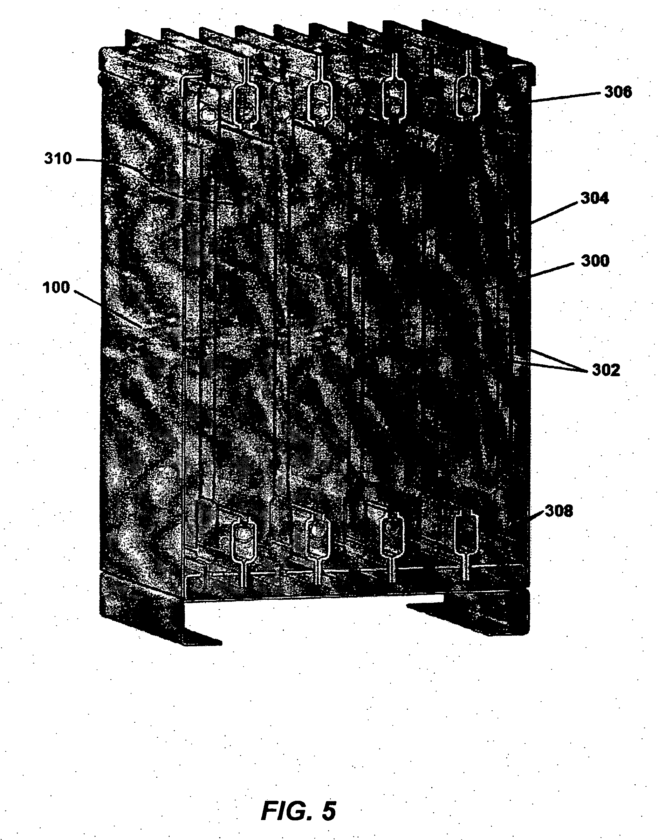

As illustrated in **Figure 5****,** a plurality of modular oxidant heat exchange packets 300 can be supported by the housing **100.** In one embodiment, at least two heat exchange packets 300 can be positioned within the housing **100** in spaced opposition with each other, to define an oxidant chamber **310** therebetween. In a particular embodiment, the modular oxidant heat exchange packets **300** are positioned substantially vertically within the housing, such as shown in **Figure 5****.**

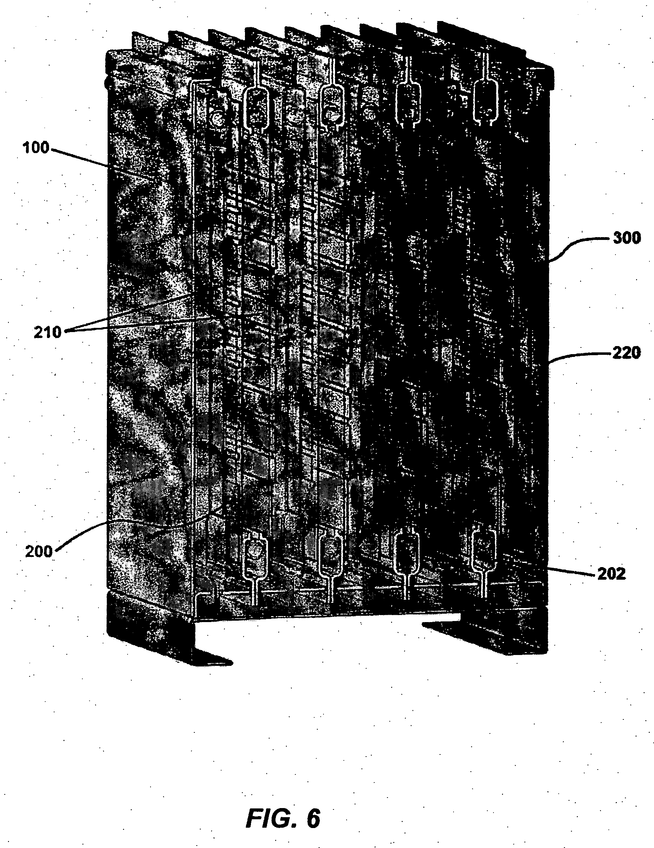

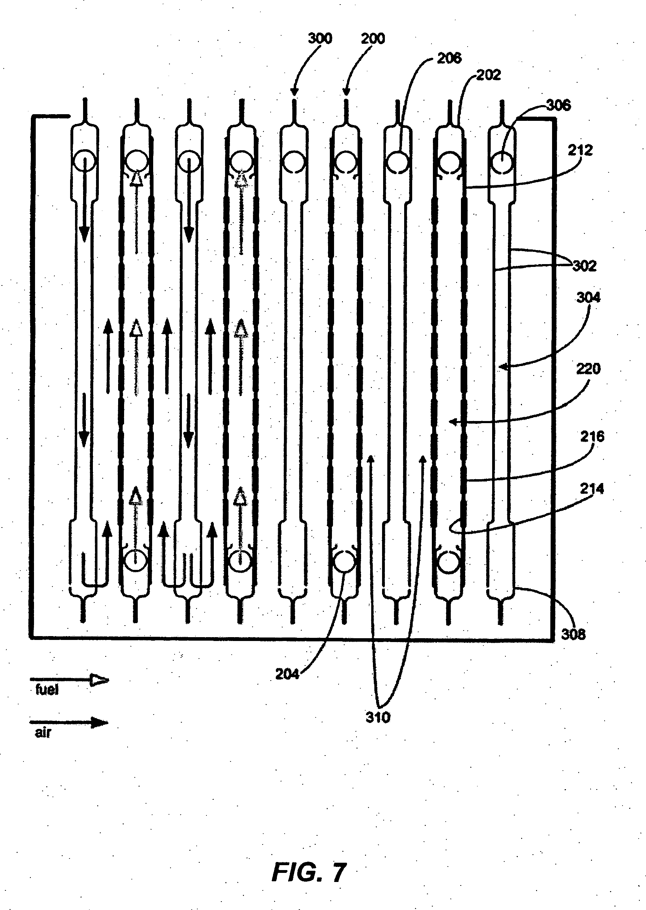

The housing 100 can similarly support at least one modular fuel cell packet, such as shown in **Figures 6** and **7****.** In a particular embodiment, the at least one modular fuel cell packet 200 is positioned in between and in spaced relation to a pair of modular oxidant heat exchange packets **300** (e.g., within the oxidant chamber **310**), thus forming cathode reaction chamber(s) **310A** situated between the walls of the fuel cell packets **200** and the walls of the heat exchange packets **300.** That is, the heat exchange packet **300** faces the cathode side(s) of the fuel cell devices **210** of the modular fuel cell packets **200.** Spaces (wall to wall) between adjacent packets may be, for example, of about 0.5 mm to 7 mm, more preferably 1 mm to 5 mm. According to various embodiments, a modular solid oxide fuel cell device can comprise "n" fuel cell packets and "n + 1" modular oxidant heat exchange packets. For example, a modular solid oxide fuel cell device can comprise one (1) modular fuel cell packets and two (2) modular oxidant heat exchange packets. In another embodiment, "n" can be at least two (2), such that a modular solid oxide fuel cell device can comprise at least two (2) modular fuel cell packets and at least three (3) modular oxidant heat exchange packets. It is contemplated that, according to various embodiments, a modular solid oxide fuel cell can comprise any number of modular fuel cell packets and any number of modular oxidant heat exchange packets and is not intended to be limited to the specific numbers referred to herein.

**Figure 7** illustrates schematically the exemplary flow of an oxidant, such as air, and fuel within a modular solid oxide fuel cell system that utilizes heat exchange packets similar to that shown in **Figure 4A.** As illustrated, air enters the device via the oxidant inlet **306** of at least one of the modular oxidant heat exchange packets **300.** In this embodiment, the air flows downwardly (i.e., in direction of gravity) through the heat exchange packet (i.e., through the interior volume 301 formed therein) and exits the oxidant chamber via the outlet **308.** The air then passes through the oxidant chamber **310** (and thus through the cathode reaction chamber **310A**) along the cathode side or surface of the modular fuel cell packet positioned next to the heat exchange packet. As described above, the air or oxidant reacts with the cathodes **216** to produce oxygen ions, which are conducted through the electrolyte sheet **212** to the anode side or surface. Fuel, such as but not limited to hydrogen gas, enters the modular fuel cell packet **200,** specifically into the anode chamber **220,** via the fuel inlet **204.** The fuel reacts with the oxygen ions at the anodes to form water and electricity. The products of this reaction (e.g., exhaust gas) exit the anode chamber via the outlet **206.**

As illustrated in **Figure 7****,** with respect to a modular heat exchange packet **300** that is positioned between two modular fuel cell packets **200** (the air passing through the interior volume **304** of the heat exchange packet can exit via the outlets **308** defined in each side wall **302** of the respective heat exchange packet. In this manner, air can pass through the oxidant chamber **310** along the cathode side of each of the fuel cell packets **200** that faces the respective heat exchange packet **300.** Thus, the walls of the fuel cell packet **200** and the walls of the adjacent respective heat exchange packets (oxidant heat exchange packets) **300** provide, in part, cathode reaction chambers **310A** in which air flows between the walls of the fuel cell packet **200** and the walls of the adjacent respective heat exchange packets **300.** The heat exchange packets **300** help control and/or minimize thermal gradients within the fuel cell packet(s) **200** and the fuel cell stack by transferring thermal energy generated by the fuel cell packet(s) **200** to cooler air within the heat exchange packets oxidant heat exchange packet(s) **300,** for example by utilizing a radiant susceptor and spreader. That is, the walls of the heat exchange packets act as radient susceptors by radiant heat absorption, and then spread the heat and provide it to the oxidant inside the interior volume **301** of the heat exchange packets **300.** For example, the heat is:
**(i)** first radiantly transferred from the fuel cell packet (the heat is generated along the electrolyte sheets of the modular fuel cell packets by the reaction of the fuel with the oxygen ions) to the air situated between the fuel cell packet(s) **200** and the heat exchange packet(s) **300** -i.e., to the air within the oxidant chamber along the cathode side of each of the fuel cell packet(s) that faces the respective heat exchange packet;
**(ii)** conductively spread throughout the wall surface of the heat exchange packet(s) **300;** and then
**(iii)** finally transferred to the incoming air via convection and/or gas phase conduction.

In the exemplary embodiment shown in **Figure 7****,** the air (or fuel in an alternate embodiment not described herein) is first preheated in by the heat release from the electrode assembly **210.** The heat is first radiantly transferred from the fuel cell devices **210** or the side walls of the fuel packet(s) **200** to the alloy wall surface(s) of the heat exchange packet(s) **300,** then is conductively spread throughout the walls of the heat exchange packet(s) **300,** and finally transferred to the incoming air via convection and to a lesser extent gas phase conduction. Preferably, the temperature gradient can be maintained within 50 °C, more preferably within 35 °C, and most preferably within 25 °C.

According to various embodiments, the oxidant must be at a predetermined temperature in order to react with the cathodes, or in order to allow for a faster and/or more efficient electrochemical reaction with the cathodes. According to other embodiments, the fuel may also need to be at a predetermined temperature in order to react with the oxygen ions to produce the electricity. In one embodiment, the predetermined temperature of the supplied fuel, air, or both, can be any temperature greater than 600 °C, such as approximately 600 °C-1000 °C. Optionally, the predetermined temperature of the fuel, air, or both, can be in the range of from about 650 °C to about 900 °C, preferably 700 °C to about 900 °C, or 650 °C -800 °C.

In a particular embodiment, the air or oxidant that is initially provided to the modular fuel cell system can be preheated to a specific predetermined temperature. Optionally, heat is generated along the electrolyte sheets **212** of the modular fuel cell packets 200 by the reaction of the fuel with the oxygen ions. The thermal energy produced can be conducted through the side walls of each of the modular heat exchange packets **300** to preheat the air passing therethrough. Thus, in one embodiment, the modular heat exchange packets **300** can be comprised of a material having a predetermined thermal conductivity. Therefore, in one embodiment, the thermal energy that is produced by the reactions of the fuel cell packets can be used to preheat the oxidant, which is needed to produce the reactions. As described above, the oxidant can be preheated by an external preheating means in order to initially start the process. However, it is contemplated that upon an initial reaction at a fuel cell packet **200,** the modular solid oxide fuel cell system can be substantially self-sustaining without the need for external heating means for either the oxidant or the fuel or both. Thus, once an initial reaction has occurred within the modular solid oxide fuel cell system, relatively cooler air can be brought into the fuel cell system via the inlets of the heat exchange packets **300,** and this air can be progressively heated as it passes therethrough and can reach the necessary predetermined temperature by the time that the air passes along and reacts with the cathodes **216.**

As may be appreciated by one skilled in the art, as the reactions occur within the modular solid oxide fuel cell system **10,** the components therein will endure thermal expansion and/or contraction. In one embodiment, due to the spatial separation between each of the modular heat exchange packets **300** and each of the modular fuel cell packets **200,** each of the packets can expand at varying rates without interfering with the other packets. In one embodiment, for example, the modular heat exchange packets have walls that can comprise a material having a higher coefficient of thermal expansion (CTE) than that of the frame of the modular fuel cell packets, for instance. Thus, the modular heat exchange packets may experience larger thermal gradients than those experienced by the fuel cell packets, and thus can move independently of the fuel cell packets and avoid interfering therewith

It should be understood that while the present invention has been described in detail with respect to certain illustrative and specific embodiments thereof, it should not be considered limited to such, as numerous modifications are possible without departing from the scope of the present invention as defined in the appended claims.

## Claims

1. A modular solid oxide fuel cell system, comprising:
a housing;
at least one modular fuel cell packet comprising:
a fuel cell frame;
a first electrode assembly comprising a first planar electrolyte sheet having a plurality of anodes disposed on a first surface of the first electrolyte sheet and a plurality of cathodes disposed on an opposed second surface of the first electrolyte sheet; and
a second electrode assembly comprising a second planar electrolyte sheet having a plurality of anodes disposed on a first surface of the second electrolyte sheet and a plurality of cathodes disposed on an opposed second surface of the second electrolyte sheet,
wherein the fuel cell frame supports the first and second electrode assemblies such that the respective first and second electrode assemblies are separated from one another and such that the respective first surfaces of the respective first and second electrolyte sheets face each other and define an anode chamber, wherein the fuel cell frame further defines a fuel inlet in fluid communication with the anode chamber; and
a plurality of modular oxidant heat exchange packets, each heat exchange packet comprising a body having a pair of opposed, spaced side walls, wherein the body further defines an interior volume, an oxidant inlet in communication with the interior volume, and at least one outlet in communication with the interior volume,
wherein the housing supports the at least one modular fuel cell packet and the plurality of modular heat exchange packets, wherein a pair of modular heat exchange packets of the plurality of modular heat exchange packets are positioned in spaced opposition and define an oxidant chamber therebetween, wherein one modular fuel cell packet of the at least one modular fuel cell packet is positioned within the oxidant chamber in spaced relation to the pair of modular heat exchange packets; and wherein the outlet of the pair of modular heat exchange packets is in fluid communication with the oxidant chamber.

2. The modular solid oxide fuel cell system of Claim 1, comprising "n" fuel cell packets and "n + 1 "modular oxidant heat exchange packets, wherein "n" is at least 2.

3. The modular solid oxide fuel cell system of Claim 1, wherein the pair of opposed, spaced side walls are in radiant thermal communication with heat emitted from the at least one modular fuel cell packet and wherein the pair of opposed, spaced side walls preheat oxidant flowing through the interior volume of the heat exchange packet.

4. The modular solid oxide fuel cell system of Claim 1, wherein the plurality of modular heat exchange packets comprise stamped metal.

5. The modular solid oxide fuel cell system of Claim 1, wherein each of the modular heat exchange packets and the at least one modular fuel cell packet are positioned in spaced opposition of at least 0.75 inches.

6. A method for generating electrical power, comprising:
providing a modular solid oxide fuel cell system comprising:
a housing;
at least one modular fuel cell packet comprising a fuel cell frame, a first electrode assembly comprising a first planar electrolyte sheet having a plurality of anodes disposed on a first surface of the first electrolyte sheet and a plurality of cathodes disposed on an opposed second surface of the first electrolyte sheet, and a second electrode assembly comprising a second planar electrolyte sheet having a plurality of anodes disposed on a first surface of the second electrolyte sheet and a plurality of cathodes disposed on an opposed second surface of the second electrolyte sheet, wherein the fuel cell frame supports the first and second electrode assemblies such that the respective first and second electrode assemblies are separated from one another and such that the respective first surfaces of the respective first and second electrolyte sheets face each other and define an anode chamber, wherein the fuel cell frame further defines a fuel inlet in fluid communication with the anode chamber; and
a plurality of modular oxidant heat exchange packets, each heat exchange packet comprising a body having a pair of opposed, spaced side walls, wherein the body further defines an interior volume, an oxidant inlet in communication with the interior volume, and at least one outlet in communication with the interior volume;
positioning at least two of the plurality of modular oxidant heat exchange packets within the housing in spaced relation to each other;
positioning one of the at least one modular fuel cell packets within the housing and in between the at least two modular oxidant heat exchange packets, wherein the at least one modular fuel cell packets is in spaced relation to each of the at least two modular oxidant heat exchange packets;
supplying an oxidant stream to the oxidant inlet of at least one of the modular oxidant heat exchange packets; and
supplying a fuel stream to the fuel inlet of the at least one modular fuel cell packet.

7. The method of Claim 6, wherein the oxidant stream passes through the interior volume of the at least one modular oxidant heat exchange packet, through the outlet of the at least one modular oxidant heat exchange packet, into the oxidant chamber defined therebetween the at least one modular oxidant heat exchange packet and the at least one modular fuel cell packet, and wherein the fuel stream passes through the fuel inlet into the anode chamber of the at least one modular oxidant heat exchange packet, the method further comprising generating an electrochemical reaction along at least the electrolyte sheet in communication with the oxidant chamber defined therebetween the at least one modular oxidant heat exchange packet and the at least one modular fuel cell packet.

8. The method of Claim 7, wherein the electrochemical reaction generates thermal energy, the method further comprising thermally communicating at least a portion of the thermal energy to the at least one modular heat exchange packet.

9. The method of Claim 8, further comprising preheating the oxidant stream to a predetermined temperature using at least a portion of the thermal energy communicated to the at least one modular heat exchange packet.

10. The method of Claim 9, wherein the predetermined temperature is greater than 700 °C.

11. The method of Claim 9, wherein the predetermined temperature is in the range of 700 °C to 800 °C.

12. The method of Claim 6, further comprising preheating the oxidant stream prior to supplying the oxidant stream to the oxidant inlet.

13. The method of Claim 6, wherein the oxidant comprises oxygen-containing air.

14. The method of Claim 6, wherein the fuel comprises hydrogen gas.

15. The method of Claim 6, wherein the modular solid oxide fuel cell system comprises "n" fuel cell packets and "n + 1" modular oxidant heat exchange packets and wherein "n" is at least 2.

## Patentansprüche

1. Modulares Festoxid-Brennstaffzellensystem, das Folgendes umfasst:
ein Gehäuse;
wenigstens ein modulares Brerinstoffzellenpaket, das Folgendes umfasst:
einen Brennstoffzellenrahmen;
eine erste Elektrodenbaugruppe, die ein erstes planares Elektrolytblech mit mehreren auf einer ersten Fläche des ersten Elektrolytblechs angeordneten Anoden und mehreren auf einer gegenüberliegenden zweiten Fläche des ersten Elektrolytblechs angeordneten Kathoden umfasst; und
eine zweite Elektrodenbaugruppe, die ein zweites planares Elektrolytblech mit mehreren auf einer ersten Fläche des zweiten Elektrolytblechs angeordneten Anoden und mehreren auf einer gegenüberliegenden zweiten Fläche des zweiten Elektrolytblechs angeordneten Kathoden umfasst,
wobei der Brennstoffzellenrahmen die erste und die zweite Elektrodenbaugruppe so trägt, dass die jeweilige erste und zweite Elektrodenbaugruppe voneinander getrennt sind, und so, dass die jeweilige erste Fläche der ersten und zweiten Elektrolytbleche jeweils einander zugewandt sind und eine Anodenkammer definieren, wobei der Brennstoffzellenrahmen ferner einen Brennstoffeinlass in Fluidverbindung mit der Anodenkammer definiert; und
mehrere modulare Oxidationsmittel-Wärmetauscherpakete, wobei jedes Wärmetauscherpaket einen Körper mit einem Paar gegenüberliegender, beabstandeter Seitenwände umfasst, wobei der Körper ferner ein Innenvolumen, einen Oxidationsmitteleinlass in Verbindung mit dem Innenvolumen und wenigstens einen Auslass in Verbindung mit dem Innenvolumen definiert,
wobei das Gehäuse das wenigstens eine modulare Brennstoffzellenpaket und die mehreren modularen Wärmetauscherpakete trägt, wobei ein Paar modularer Wärmetauscherpakete der mehreren modularen Wärmetauscherpakete in einer beabstandeten Gegenüberlage positioniert sind und eine Oxidationsmittelkammer dazwischen definieren, wobei ein modulares Brennstoffzellenpaket des wenigstens einen modularen Brennstoffzellenpakets in der Oxidationsmittelkammer in einer beabstandeten Beziehung zu dem Paar modularen Wärmetauscherpaketen positioniert ist; und wobei der Auslass des Paares von modularen Wärmetauscherpaketen in Fluidverbindung mit der Oxidationsmittelkammer ist.

2. Modulares Festoxid-Brennstoffzellensystem nach Anspruch 1, das "n" Brennstoffzellenpakete und "n + 1" modulare Oxidationsmittel-Wärmetauscherpakete umfasst, wobei "n" wenigstens 2 ist.

3. Modulares Festoxid-Brennstoffzellensystem nach Anspruch 1, wobei das Paar gegenüberliegender, beabstandeter Seitenwände in Strahlungswärmeverbindung mit Wärme ist, die von dem wenigstens einen modularen Brennstoffzellenpaket emittiert wird, und wobei das Paar gegenüberliegender, beabstandeter Seitenwände Oxidationsmittel vorheizt, das durch das Innenvolumen des Wärmetauscherpakets fließt.

4. Modulares Festoxid-Brennstoffzellensystem nach Anspruch 1, wobei die mehreren modularen Wärmetauscherpakete ausgestanztes Metall umfassen.

5. Modulares Festoxid-Brennstoffzellensystem nach Anspruch 1, wobei jedes der modularen Wärmetauscherpakete und das wenigstens eine modulare Brennstoffzellenpaket in beabstandeter Gegenüberlage von wenigstens 0,75 Zoll positioniert sind.

6. Verfahren zum Erzeugen von elektrischem Strom, das Folgendes beinhaltet:
Bereitstellen eines modularen Festoxid-Brennstoffzellensystems, das Folgendes umfasst:
ein Gehäuse;
wenigstens ein modulares Brennstoffzellenpaket, das Folgendes umfasst: einen Brennstoffzellenrahmen, eine erste Elektrodenbaugruppe, die ein erstes planares Elektrolytblech mit mehreren auf einer ersten Fläche des ersten Elektrolytblechs ausgebildeten Anoden und mehreren auf einer gegenüberliegenden zweiten Fläche des ersten Elektrolytblechs angeordneten Kathoden umfasst, und eine zweite Elektrodenbaugruppe, die ein zweites planares Elektrolytblech mit mehreren auf einer ersten Fläche des zweiten Elektrolytblechs angeordneten Anoden und mehreren auf einer gegenüberliegenden zweiten Fläche des zweiten Elektrolytblechs angeordneten Kathoden umfasst, wobei der Brennstoffzellenrahmen die erste und die zweite Elektrodenbaugruppe so trägt, dass die erste und zweite Elektrodenbaugruppe jeweils voneinander getrennt sind, und so, dass die jeweiligen ersten Flächen des ersten und zweiten Elektrolytblechs jeweils einander zugewandt sind und eine Anodenkammer definieren, wobei der Brennstoffzellenrahmen ferner einen Brennstoffeinlass in Fluidverbindung mit der Anodenkammer definiert; und
mehrere modulare Oxidationsmittel-Wärmetauscherpakete, wobei jedes Wärmetauscherpaket einen Körper mit einem Paar gegenüberliegender, beabstandeter Seitenwände umfasst, wobei der Körper ferner ein Innenvolumen, einen Oxidationsmitteleinlass in Verbindung mit dem Innenvolumen und wenigstens einen Auslass in Verbindung mit dem Innenvolumen definiert;
Positionieren von wenigstens zwei der mehreren modularen Oxidationsmittel-Wärmetauscherpakete in dem Gehäuse in einer beabstandeten Beziehung zueinander;
Positionieren von einem des wenigstens einen modularen Brennstoffzellenpakets in dem Gehäuse und zwischen den wenigstens zwei modularen Oxidationsmittel-Wärmetauscherpaketen, wobei das wenigstens eine modulare Brennstoffzellenpaket in beabstandeter Beziehung zu jedem der wenigstens zwei modularen Oxidationsmittel-Wärmetauscherpakete ist;
zuführen eines Oxidationsmittelstroms zu dem Oxidationsmitteleinlass von wenigstens einem der modularen Oxidationsmittel-Wärmetauscherpakete; und
Zuführen eines Brennstoffstroms zum Brennstoffeinlass des wenigstens einen modularen Brennstoffzellenpakets.

7. Verfahren nach Anspruch 6, wobei der Oxidationsmittelstrom durch das Innenvolumen des wenigstens einen modularen Oxidationsmittel-Wärmetauscherpakets, durch den Auslass des wenigstens einen modularen Oxidationsmittel-Wärmetauscherpakets in die Oxidationsmittelkammer fließt, die zwischen dem wenigstens einen modularen Oxidationsmittel-Wärmetauscherpaket und dem wenigstens einen modularen Brennstoffzellenpaket definiert ist, und wobei der Brennstoffstrom durch den Brennstoffeinlass in die Anodenkammer des wenigstens einen modularen Oxidationsmittel-Wärmetauscherpakets fließt, wobei das Verfahren ferner das Erzeugen einer elektrochemischen Reaktion entlang wenigstens dem Elektrodenblech in Verbindung mit der Oxidationsmittelkammer beinhaltet, die zwischen dem wenigstens einen modularen Oxidationsmittel-Wärmetauscherpaket und dem wenigstens einen modularen Brennstoffzellenpaket definiert wird.

8. Verfahren nach Anspruch 7, wobei die elektrochemische Reaktion Wärmeenergie erzeugt, wobei das Verfahren ferner das thermische Übertragen wenigstens eines Teils der Wärmeenergie zu dem wenigstens einen modularen Wärmetauscherpaket beinhaltet.

9. Verfahren nach Anspruch 8, das ferner das Vorheizen des Oxidationsmittelstroms auf eine vorbestimmte Temperatur mit wenigstens einem Teil der zu dem wenigstens einen modularen Wärmetauscherpaket übertragenen Wärmeenergie beinhaltet.

10. Verfahren nach Anspruch 9, wobei die vorbestimmte Temperatur höher als 700 °C ist.

11. Verfahren nach Anspruch 9, wobei die vorbestimmte Temperatur im Bereich von 700 °C bis 800 °C liegt.

12. Verfahren nach Anspruch 6, das ferner das Vorheizen des Oxidationsmittelstroms vor dem Zuführen des Oxidationsmittelstroms zum Oxidationsmitteleinlass beinhaltet.

13. Verfahren nach Anspruch 6, wobei das Oxidationsmittel sauerstoffhaltige Luft umfasst.

14. Verfahren nach Anspruch 6, wobei der Brennstoff Wasserstoffgas umfasst.

15. Verfahren nach Anspruch 6, wobei das modulare Festoxid-Brennstoffzellensystem "n" Brennstoffzellenpakete und "n + 1" modulare Oxidationsmittel-Wärmetauscherpakete umfasst, und wobei "n" wenigstens 2 ist.

## Revendications

1. Système modulaire de piles à combustible à oxyde solide, comprenant :
un logement ;
au moins un paquet modulaire de piles à combustible comprenant :
un châssis de piles à combustible ;
un premier ensemble d'électrodes comprenant une première feuille d'électrolyte plane, une pluralité d'anodes étant disposée sur une première surface de la première feuille d'électrolyte et une pluralité de cathodes étant disposée sur une seconde surface opposée de la première feuille d'électrolyte ; et
un second ensemble d'électrodes comprenant une seconde feuille d'électrolyte plane, une pluralité d'anodes étant disposée sur une première surface de la seconde feuille d'électrolyte et une pluralité de cathodes étant disposée sur une seconde surface opposée de la seconde feuille d'électrolyte,
dans lequel le châssis de piles à combustible supporte les premier et second ensembles d'électrodes de telle sorte que les premier et second ensembles d'électrodes respectifs soient séparés l'un de l'autre et de telle sorte que les premières surfaces respectives des première et seconde feuilles d'électrolytes se fassent face et définissent une chambre d'anodes, le châssis de piles à combustible définissant en outre une admission de combustible en communication fluidique avec la chambre d'anodes ; et
une pluralité de paquets modulaires d'échange thermique à oxydant, chaque paquet d'échange thermique comprenant un corps ayant une paire de parois latérales espacées, opposées, le corps définissant en outre un volume intérieur, une admission d'oxydant en communication avec le volume intérieur, et au moins une sortie en communication avec le volume intérieur,
dans lequel le logement supporte l'au moins un paquet modulaire de piles à combustible et la pluralité de paquets modulaires d'échange thermique, une paire de paquets modulaires d'échange thermique de la pluralité de paquets modulaires d'échange thermique sont positionnés en opposition espacée et définissent une chambre d'oxydant entre eux, un paquet modulaire de piles à combustible de l'au moins un paquet modulaire de piles à combustible étant positionné dans la chambre d'oxydant en relation espacée par rapport à la paire de paquets modulaires d'échange thermique ; et dans lequel la sortie de la paire de paquets modulaires d'échange thermique est en communication fluidique avec la chambre d'oxydant.

2. Système modulaire de piles à combustible à oxyde solide selon la revendication 1, comprenant "n" paquets de piles à combustible et "n+1" paquets modulaires d'échange thermique à oxydant, "n" étant au moins 2.

3. Système modulaire de piles à combustible à oxyde solide selon la revendication 1, dans lequel la paire de parois latérales espacées opposées est en communication thermique rayonnante avec une chaleur émise depuis l'au moins un paquet modulaire de piles à combustible et dans lequel la paire de parois latérales espacées opposées préchauffe l'oxydant qui s'écoule dans le volume intérieur du paquet d'échange thermique.

4. Système modulaire de piles à combustible à oxyde solide selon la revendication 1, dans lequel la pluralité de paquets modulaires d'échange thermique comprend du métal estampé.

5. Système modulaire de piles à combustible à oxyde solide selon la revendication 1, dans lequel chacun des paquets modulaires d'échange thermique et l'au moins un paquet modulaire de piles à combustible sont positionnés en opposition espacée d'au moins 0,75 pouces.

6. Procédé de génération de puissance électrique, comprenant:
la fourniture d'un système modulaire de piles à combustible à oxyde solide comprenant:
un logement ;
au moins un paquet modulaire de piles à combustible comprenant un châssis de piles à combustible, un premier ensemble d'électrodes comprenant une première feuille d'électrolyte plane, une pluralité d'anodes étant disposée sur une première surface de la première feuille d'électrolyte et une pluralité de cathodes étant disposée sur une seconde surface opposée de la première feuille d'électrolyte, et un second ensemble d'électrodes comprenant une seconde feuille d'électrolyte plane, une pluralité d'anodes étant disposée sur une première surface de la seconde feuille d'électrolyte et une pluralité de cathodes étant disposée sur une seconde surface opposée de la seconde feuille d'électrolyte, dans lequel le châssis de piles à combustible supporte les premier et second ensembles d'électrodes de telle sorte que les premier et second ensembles d'électrodes respectifs soient séparés l'un de l'autre et de telle sorte que les premières surfaces respectives des première et seconde feuilles d'électrolytes se fassent face et définissent une chambre d'anodes, le châssis de piles à combustible définissant en outre une admission de combustible en communication fluidique avec la chambre d'anodes ; et
une pluralité de paquets modulaires d'échange thermique à oxydant, chaque paquet d'échange thermique comprenant un corps ayant une paire de parois latérales espacées, opposées, le corps définissant en outre un volume intérieur, une admission d'oxydant en communication avec le volume intérieur, et au moins une sortie en communication avec le volume intérieur ;
le positionnement d'au moins deux de la pluralité de paquets modulaires d'échange thermique à oxydant dans le logement en relation espacée l'un par rapport à l'autre ;
le positionnement de l'un de l'au moins un paquet modulaire de piles à combustibles dans le logement et entre les au moins deux paquets modulaires d'échange thermique à oxydant, l'au moins un paquet modulaire de piles à combustible étant en relation espacée par rapport à chacun des au moins deux paquets modulaires d'échange thermique à oxydant ;
la fourniture d'un courant d'oxydant à l'admission d'oxydant de l'au moins un paquet modulaire d'échange thermique à oxydant ; et
la fourniture d'un courant de combustible à l'admission de combustible de l'au moins un paquet modulaire de piles à combustible.

7. Procédé selon la revendication 6, dans lequel le courant d'oxydant passe par le volume intérieur de l'au moins un paquet modulaire d'échange thermique à oxydant, par la sortie de l'au moins un paquet modulaire d'échange thermique à oxydant, dans la chambre d'oxydant définie entre l'au moins un paquet modulaire d'échange thermique à oxydant et l'au moins un paquet modulaire de piles à combustible, et dans lequel le courant de combustible passe par l'admission de combustible jusque dans la chambre d'anodes de l'au moins un paquet modulaire d'échange thermique à oxydant, le procédé comprenant en outre la génération d'une réaction électrochimique le long de l'au moins une feuille d'électrolyte en communication avec la chambre d'oxydant définie entre l'au moins un paquet modulaire d'échange thermique à oxydant et l'au moins un paquet modulaire de piles à combustible.

8. Procédé selon la revendication 7, dans lequel la réaction électrochimique génère une énergie thermique, le procédé comprenant en outre la communication thermique d'au moins une partie de l'énergie thermique à l'au moins un paquet modulaire d'échange thermique.

9. Procédé selon la revendication 8, comprenant en outre le préchauffage du courant d'oxydant à une température prédéterminée en utilisant au moins une partie de l'énergie thermique communiquée à l'au moins un paquet modulaire d'échange thermique.

10. Procédé selon la revendication 9, dans lequel à température prédéterminée est supérieure à 700 °C.

11. Procédé selon la revendication 9, dans lequel la température prédéterminée est comprise dans la plage de 700 °C à 800 °C.

12. Procédé selon la revendication 6, comprenant en outre le préchauffage du courant d'oxydant avant la fourniture du courant d'oxydant à l'admission d'oxydant.

13. Procédé selon la revendication 6, dans lequel l'oxydant comprend de l'air en teneur en oxygène.

14. Procédé selon la revendication 9, dans lequel le combustible comprend du gaz d'hydrogène.

15. Procédé selon la revendication 6, dans lequel le système modulaire de piles à combustible à oxyde solide comprend "n" paquets de piles à combustible et "n+1" paquets modulaires d'échange thermique à oxydant, "n" étant au moins 2.
